# EUROPEAN PATENT APPLICATION

(11) **EP 3 499 398 A2**
(43) Date of publication of application: **19.06.2019**
(21) Application number: 18213446.0
(22) Date of filing: 18.12.2018
(51) Int. Cl.: G06F 21/60, H04L 9/08, H04L 29/06

(54) **SECURE STORAGE OF MONOTONIC ODO VALUE INSIDE A SECURE HARDWARE ELEMENTS UPDATE COUNTER**

(30) Priority: 18.12.2017 US 201715845250
(71) Applicant: Visteon Global Technologies, Inc., Van Buren Township, MI 48111-5711 (US)
(72) Inventor: WILMER, Thorsten, 76646 Bruchsal (DE)
(74) Representative: MERH-IP Matias Erny Reichl Hoffmann Patentanwälte PartG mbB

(57) **Abstract**

A system for securely storing data, such as an odometer value in a vehicle, includes a non-transitory computer readable medium to store instructions of the system and a processor configured to execute the instructions. The processor is configured to use a master key to update a key and use a first key to store a value. The processor is further configured to use a second key for hiding the data and use a third key for securing the data.

## Description

### BACKGROUND

The distance a vehicle has traveled has a LARGE impact on the resale value of the vehicle. The more distance the vehicle has traveled, the lower the resale value is for the vehicle. An odometer (ODO) tracks the distance, such as miles or kilometers traveled in the vehicle. Thus, if an ODO value is decreased, the resale value of the vehicle would increase and the next vehicle owner would likely have overpaid for the vehicle. Even though tampering with the ODO value is illegal in many countries, such criminal activity exists. If a person, or an attacker, can modify the software for the ODO to write a lower ODO value, merely storing the ODO value is not enough to secure the ODO value. With current implementations of ODO systems, the ODO value can be reset or another value can be written by a secret diagnosis (OBD/UDS) job of an original equipment manufacturer (OEM). The value can be adjusted using leaked keys intended to protect the above job. The ODO value can also be adjusted using software bugs (e.g. buffer overflows) that allow the attacker to modify the executed program and trick the program into writing a new, lower ODO value. Due to modifications to the software itself, it can be difficult to trace the previous readings. Thus, people may not trust the value of a digital ODO system.

Some methods are used to prevent ODO values from being modified; however, such methods are not always effective or practical. For example, One True Pairing (OTP) bits are used such that one bit is written to 0 every x miles/kilometers and a person can determine how many miles/kilometers the vehicle is driven by reading the number of 0's. External flash with OTP bits can also be verified by a third party at a later point. The problem with external flash is that to prove the ODO value, the external flash has to be read. If the external flash is internal, then the third party examining the external flash has to trust the software running on the ECU (i.e. the car computer). If the software on the external flash has a software bug or virus (e.g. the attacker inserts a code inside the ECU to fake the examination and the read-out value), the reading cannot be trusted. Also, storing the ODO value in an encrypted form inside the external flash does not improve accuracy because the software can still write any value, including an incorrect lower value.

### SUMMARY

This section provides a general summary of the present disclosure and is not a comprehensive disclosure of its full scope or all of its features, aspects, and objectives.

Disclosed herein are implementations of a system for securely storing data. The system includes a non-transitory computer readable medium to store instructions of the system and a processor configured to execute the instructions. The processor is configured to use a master key to update a key and use a first key to store a value. The processor is further configured to use a second key for hiding the data and use a third key for securing the data.

Also disclosed herein are implementations of a system for updating an odometer (ODO) value in a vehicle. The system comprises a microprocessor, a sensor, and a dedicated flash. The microprocessor is configured to execute instructions stored on a non-transitory computer readable medium. The sensor is coupled to the microprocessor and configured to receive information of distance the vehicle has traveled. The dedicated flash is also coupled to the microprocessor. The microprocessor is further configured to store an ODO value as a counter, transmit a new ODO value, and accept the new ODO value if the new ODO value is higher in value than the ODO value. The processor is further configured to store the new ODO value and use the new ODO value to update the counter.

Also disclosed herein are implementations of a method for returning an ODO value through a key update procedure, wherein verification of the ODO value is performed by a backend. The backend accesses the ODO value in a vehicle having a control unit. The ODO value data is stored in a storage means. The method includes installing a first new master key over an original master key and using the first new master key to install a second new master key having key update material. The method further includes using the first master key to install a first new key containing an update counter with the ODO value concatenated by 1 and using the original master key to install a second new key.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is an illustrative block diagram depicting exemplary components of a system in accordance with one aspect of the present disclosure;
FIG. 2 is an illustrative diagram depicting a runtime implementation of updating an ODO value in accordance with one aspect of the present disclosure;
FIG. 3 is an illustrative block diagram depicting exemplary key update counter of a system in accordance with one aspect of the present disclosure;
FIG. 4 illustrates a method of an examination process of system in accordance with one aspect of the present disclosure; and
FIG. 5 is a block diagram of a method of producing keys using the examination process of FIG. 4.

### DETAILED DESCRIPTION

The following description is merely exemplary in nature and is not intended to limit the disclosure in its application or uses. For purposes of clarity, the same reference numbers are used in the description and drawings to identify similar elements.

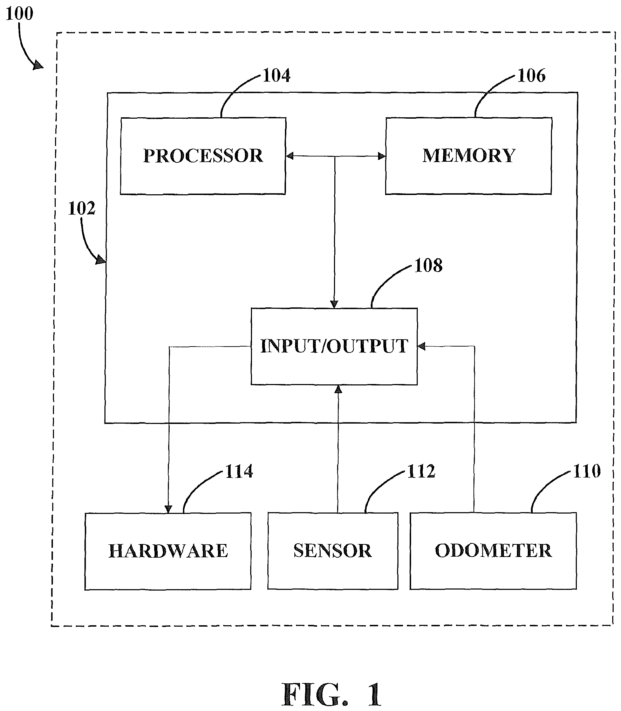

FIG. 1 is an illustrative block diagram depicting exemplary components of a system 100 in accordance with one aspect of the present disclosure. The system 100 may include additional and/or fewer components and is not limited to those illustrated in FIG. 1. The system 100 may be an internal computer system of a vehicle. The system 100 includes a control unit 102, such as an Electronic Control Unit (ECU) or another electronic module or node capable of receiving or collecting information from the vehicle. The control unit 102 includes various components such as at least one microprocessor or processor 104, a memory 106, and an input/output 108.

The control unit 102 processes the data captured by the sensor 112. Sensor 112 may be an electrical or mechanical sensor. Sensor 112 may directly sense the distance the vehicle travels. Sensor 112 may also utilize any technology installed on the vehicle to sense the distance the vehicle travels. For example, the sensor 112 may be a displacement sensor coupled to an existing mechanical speedometer or to another vehicle component to provide a signal to a sensor signal conditioning circuit in the vehicle. The signal output from the sensor 112 or the vehicle speedometer circuit can be used directly by the processor 104. A filter may be used with the sensor 112 to prevent transients and unwanted noise from interfering with operation of an odometer 110.

The processor 104 is a device that processes signals and performs general computing and arithmetic functions. The processor 104 may include multiple single and multicore processors, co-processors, and architectures. The memory 106 may include a variety of memory, such as volatile memory and non-volatile memory. The memory 106 may also include a disk, such as but not limited to a flash memory card, a memory stick, a magnetic disk drive, a solid state disk drive, a CR-ROM, or a DVD ROM. The memory 106 may store a system that controls resources of a computing device and software that the processor 104 executes. The processor 104 and memory 106 are operatively coupled. The processor 104 performs processes by executing software instructions stored by the memory 106.

The processor 104 and the memory 106 communicate through the input/output 108. The input/output 108 is a part of the system 100 and communicates with the sensor 112 and a secure hardware element (SHE), such as hardware or SHE 114. The data captured by the sensor 112 is input to processor 104 for processing and outputting to the SHE 114 for providing an ODO value from an ODO reading of the vehicle. The processor 104 may be configured to analyze information from the odometer 110 for authenticity and accuracy. For example, the processor 104 analyzes the information to determine whether the value from the odometer reading is consistent with a vehicle history or previous readings from the vehicle. In addition, the processor 104 can conduct various tests to determine whether the received ODO value is authentic. The processor may transmit information to the SHE 114. The SHE 114 allows information, such as the ODO value, to be hardwired or read.

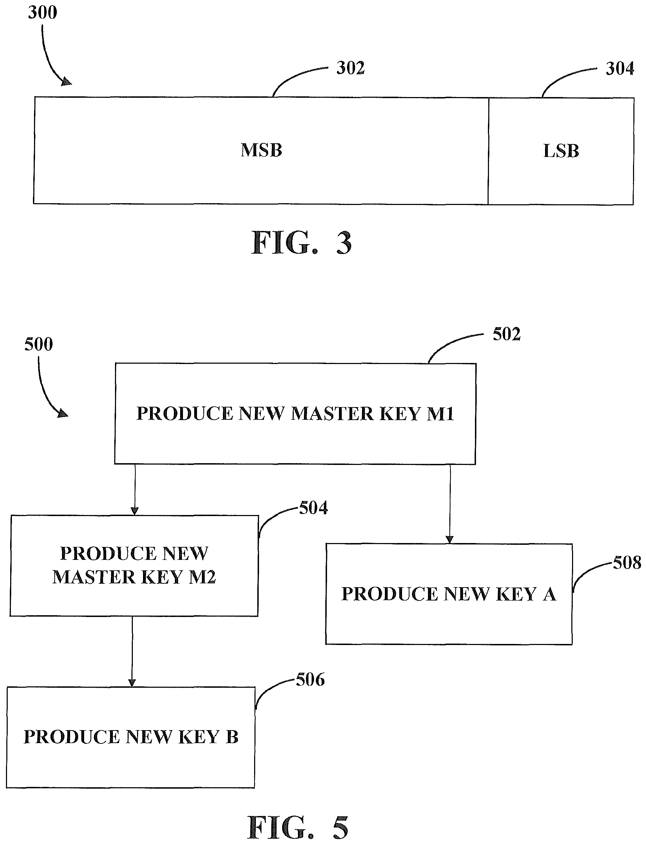

The memory 106 stores instructions to implement the system 100. The memory 106 also stores information from the sensor 112 and the odometer 110. For example, the memory 106 stores the odometer 100 in a monotonic way. The mileage is stored with a reduced temporal resolution inside a key update counter of a key in the SHE 114 as shown in FIG. 3.

As illustrated in FIG. 3, the ODO value may be encoded in a most significant bit (MSB 302) (e.g. 24 MSB) of a key update counter leaving the least significant bit (LSB) (e.g. 4 LSB 304) unused. The MSB 302 is the bit farthest to the left and the bit transmitted first in a sequence. The LSB 304 is the one farthest to the right and the bit transmitted last in a sequence. The MSB 302 is the 24 bit that represents the ODO value. The ODO value is an incremental value for distance, such as kilometers or miles. The LSB 304 is 4 bit. The MSB 302 and LSB 304 may have other bit amounts, for example, a MSB 28 and a LSB 0. The bits are used to perform a key update through a tester to verify that the ODO 110 actually has the expected value. At runtime, authentic software checks if a key update process fails. In case of a failure, the system 100 may generate a message (e.g. through LED, Message, or DTC) to inform a user that the ODO value was not updated. Such a message can indicate that the ODO value may be incorrect due to fraud.

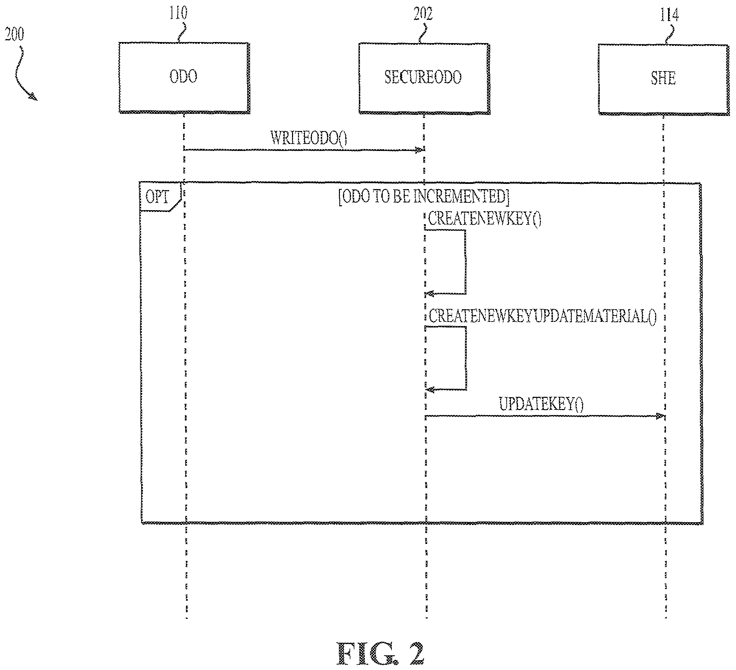

FIG. 2 illustrates a runtime implementation of updating an ODO value of system 100 in a vehicle. Generally, the system 100 includes a microprocessor, or processor 104, configured to execute instructions stored on a non-transitory computer readable medium. The system 100 also includes the sensor 112 coupled to the processor 104 and configured to receive information of distance the vehicle has traveled. The system 100 may further include a dedicated flash coupled to the processor 104. The processor stores an ODO value as a counter, transmits a new ODO value, accepts the new ODO value if the new ODO value is higher in value than the ODO value, stores the new ODO value; and uses the new ODO value to update the counter.

More specifically, the ODO value is stored in the update counter 300. To install a new key, a higher key update counter is needed. A factory reset of the update counter 300 is prevented by storing a key that is write-protected. The key storing the ODO value in the update counter 300 has a known value and is not secured. The control unit 102, such as an ECU, uses the key to update the update counter 300. To prove that the ODO value has at least a given value, the ECU performs a key update of a slot corresponding to the key. The ECU performs the update by using an ECU specific private second key. The private second key may be known, for example, by only the manufacturer of the ECU. In case the authenticity of the ODO value is in doubt, the manufacturer can share the ECU specific private second key with a third party to verify the contents of the message (e.g. the ODO value) at any time. Authenticating the ODO value is not limited to the actual act of verification of the update counter 300. The system 100 uses the update counter 300 of the SHE 114 to store the ODO value. The update counter 300 cannot be reset. Basically, the SHE 114uses an update counter 300 for storing the ODO value to prevent wiring lower values entirely because the SHE 114 ensures that the update counter 300 is always incremented (e.g., +1).

In one embodiment, the system 100 uses three user keys and one master key to verify that the ODO 110 is storing a monotonic value and that one key is write-protected so that a factory reset is not possible. The following keys are used in this embodiment: 1) a master key, 2) a first user key (e.g. Key A), 3) a second user key (e.g. Key B), and 4) a third user key (e.g. Key C). Basically, the system 100 is a system that securely stores data. The system 100 includes a non-transitory computer readable medium to store instructions of the system and a processor 104 configured to execute the instructions. The processor 104 may be configured to use a master key to update a key, use key A to store a value, use key B for hiding the data, and use a key C for securing the data. The data, such as the ODO value, is secured at a secure ODO 202. The master key M updates at least one of another master key (e.g. master key M1), the key A, the key B, and the key C. At least one of the master keys and/or the keys A, B, C is write-protected. In other words, the SHE 114 uses the update counter 300 for storing the ODO value, which prevents writing lower values entirely because the hardware ensures that the update counter 300 is always incremented.

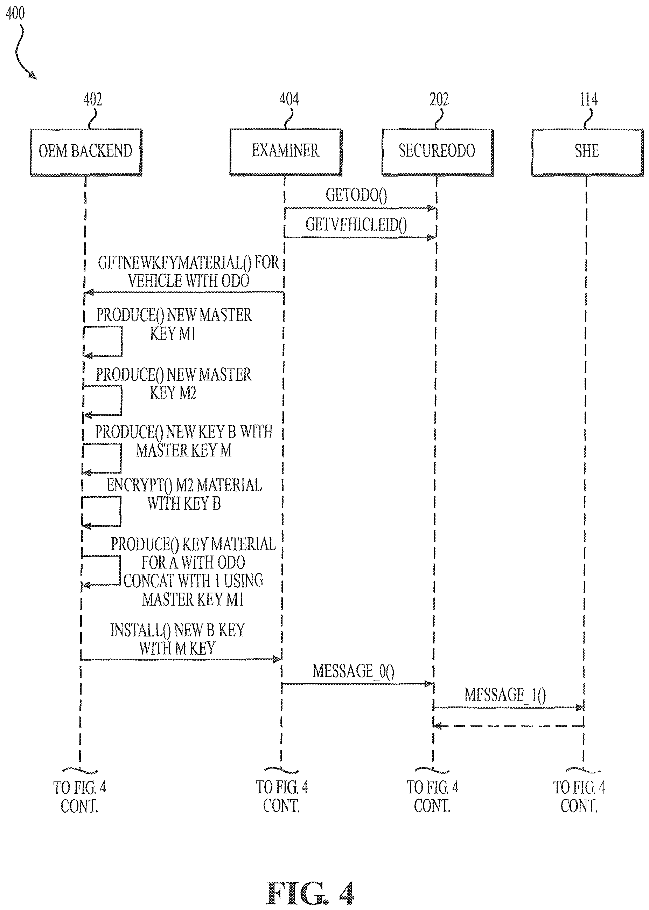

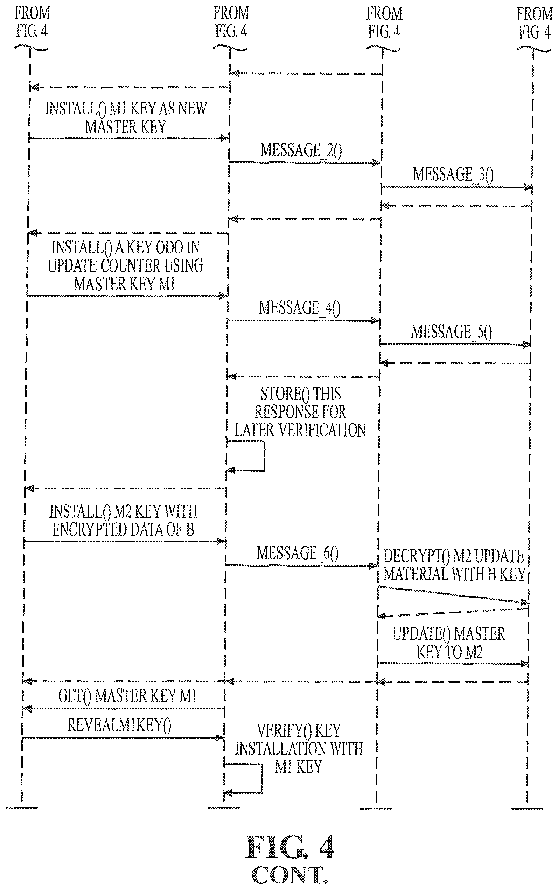

Referring to FIG. 4, the master key, initially established as M, changes later to M1, M2. The master key M updates the keys A and B and the next master key M1. The master key M1 may update the next master key M2 and the keys A and B. Master keys M and M2 may be different, the same, or the same between ECUs. The key A is a fixed key (e.g. the ID of the SHE 114). The key A stores the ODO value in the update counter 300. An OEM backend, such as backend 402, knows the key A. The key A is regarded as not secure because the software can update the key and therefore, the software knows the key A. In other words, the ECU is configured to update the key A and the backend 402 identifies the key A. The key B is used for transport encryption of key material between the backend 402 and the ECU and hiding the contents, such as from an examiner 404. The key B can be overwritten once master key M2 is installed. The key B is overwritten to remove the ability from a target to later decode key material of the master key M2. The key C is a write-protected key used to ensure that the SHE 114 cannot perform a factory reset.

In one embodiment, a key update counter, or update counter 300 has 28 bit, which covers, for example 456 kilometers. Because of the small bit, a secure ODO 202 is not updated when the vehicle travels a small distance (e.g. kilometer, meter, mile, yard etc.). The SHE 114 uses a dedicated flash where a wear levering is likely possible. The system 100 requires only one hundred write cycles per slot. More write cycles are possible, for example, having a typical flash that can sustain 100,000 flash cycles. With only one hundred write cycles per slot, the key update can happen only every 10 km to allow an ODO to cover 1 km. The counter may be updated in a variety of ways. For example, a manufacture may decide to update the counter more often while the vehicle is newer because of a greater temptation to manipulate the ODO value than for an older vehicle. The ODO value is incremented for the secure ODO 202 to properly update. If the same key is used to update the counter (i.e., the ODO value), the ODO update will fail. The ECU stores the last updated ODO value and performs an update only with the new ODO value. The ODO value incrementally updates, which leads to a bigger update counter.

More specifically, FIG. 4 illustrates a method of an examination process 400 of system 100. For the examination process 400, the examiner 404, such as a third party, has to be able to verify an encrypted reply of the ECU. The encrypted reply is verified when the encrypted reply actually contains the correct ODO value. The ODO value is returned through the key update process. A known key of slot A is not used as the reply value because the key can be faked by malicious software. Thus, a master key is used for a key update. The master key used during this update may be shared with the examiner 404, so that the examiner 404 can verify the reply from the ECU. Alternatively, the examiner 404 may trust and use the backend 402 to perform the verification.

To keep a future or new master key secret, the master key update material is encrypted with a shared key. If a fixed key is not used, the ODO update counter key is reverted to its original value, which is known to the ECU. For example, the ID of the SHE 114. The key used during the examination process 400 may be a random number chosen, for example, by the examiner 404. The key may be a predetermined number. The SHE 114 may use the key to encrypt data. The examiner 404 can reflash the ECU with authentic software to ensure that content of the flash has not been tempered with. If the ECU is running malicious software, a second master key may leak. The ECU provides the current ODO value and identification.

The backend 402 uses the current ODO value and identification to produce master keys and user keys. A new master key M1 is produced that can be installed over an original master key M. The master key M1 is shared during the examination process 400, for example, with the examiner 404. A new master key M2 is produced that can be installed using the master key M1. The master key M2 is kept secret. Only the key update material using the master key M 1 is decoded inside the ECU. The ECU does not know the master keys M1, M2. A new key B is produced that can be installed with the master key M. The key B is later changed with the master key M2 to a new secret value. A new key A is produced that contains the ODO value concatenated with +1. The update counter 300 proves that the ODO value has at least this value. The master key M1 installs the key A as authentication.

The backend 402 supervises the key update processes. The backend 402 verifies that with each transaction, the update counter 300 is encrypted with the correct master key. Because the backend 402 keeps track of the number of master keys and key updates, the backend 402 uses the correct update counter. First, the backend 402 installs the key B to send the master key M2 update material in an encrypted form into a target. This step can be skipped if the backend 402 and target have already agreed on a shared private key for encryption. To ensure that only the master key M1 can be leaked, the backend 402 installs the master key M1 with the knowledge of the master key M. Because the master key M1 can be leaked, the master key M1 is not used for sensitive tasks.

Next, the backend 402 installs the key A. The key A has an ODO value concatenated with +1 as the update counter 300. Contents of the key A can be fixed for the ECU (i.e., the ID of the SHE 114). The ECU can update the key A by knowing that the key A is used to further increment the ODO value. The request for the key A update and the reply from the ECU can be observed by the examiner 404 for further verification. In another embodiment, the key A is updated by the examiner 404 to a new value and then used to perform an encryption task.

Next, the backend 402 transfers the master key M2 key update material to the ECU to the ECU encrypted with key B. The update material is only shared with the backend 402 and the SHE 114. The master key M2 update material is then encrypted using the SHE 114. The master key M2 key material is used to update the master key M1 to M2. The decrypted key material does not leave the ECU. The backend 402 releases only the master key M1 key material after confirmation that the target has installed the master key M2.

The examiner 404 can use the information of the master key M1 to verify the key update request. For example, the examiner 404 can verify that the actual ODO value was used as an update counter and that the reply of the ECU is encrypted with the same master key M1. The reply also contains the update counter 300.

The key B and master keys M, M1, M2 may be ECU specific. The key B is protected from being used if a secure boot failed or if a debugger is connected. The key B may be used for only decryption, instead of for message authentication code (MAC) verification or generation. A key C is used in the examination process 400. The key C is write-protected to ensure that the SHE 114 cannot perform a factory reset. After the installation of the master key M2, the key B is overwritten to the new value to ensure that the target does not have the information to decrypt the master key M2 transport key material. The master key M2 can be updated to a master key M3. The master key M3 can be shared with the examiner 404.

The examination process 400 uses the update counter's monotonicity ensured by the hardware to perform a new purpose. Implementations other than storing the monotonic value inside of the update counter 300 of the SHE 114 may be implemented. For example, the monotonic value can be a value other than the ODO value. It can be any other monotonic value where there is incentive to modify a value in one direction. Some applications include electronic prepaid systems, where the money spent is incremented and stored in a distributed manner, tracking power on time of CPUs of expensive systems, and digital electric power or gas meters.

The update counter's value can be verified by the examiner 404 using the limitations of the hardware. If a key is written by the knowledge of the key B, only the key B would be shared (e.g. the master key would not be shared). Other techniques may be used, such as encrypting the ODO value and storing it along with a serial number and the ID of the ECU. The ODO may be stored in several ECUs. An ECU with enough storage may also produce a log of the ODO values and/or key updates. The examination process 400 may include additional and/or fewer steps and is not limited to those illustrated in FIG. 4.

FIG. 5 illustrates an exemplary process 500 of producing new keys for returning an odometer (ODO) value through a key update procedure. The verification of the ODO value is performed by the backend 402 accessing the ODO value in a vehicle having a control unit 102. The ODO value data is stored in a storage means, such as memory 106. In step 502, a first new master key (e.g. master key M1) is installed over an original master key (master key M). In step 504, the master key M1 is used to install a second new master key (e.g. master key M2) having key update material. The master key M1 is used to decode the key update material of the master key M2.

In step 506, the original master key M is used to install a second new key (e.g. key B). The key B has a first value. The master key M2 is used to change the first value of the key B to a second value. The method also includes verifying that the update counter 300 is encrypted with a master key, tracking a number of the master key and the key B updates, determining a correct update counter, and releasing the key update material.

In step 508, the master key M1 is used to install a first new key (e.g. key A) containing an update counter 300 with the ODO value concatenated by 1. In other words, the ODO value is incremented by one. The ODO value is authenticated by installing the key A using the master key M1. The process 500 may include additional and/or fewer steps in an alternative order and is not limited to those illustrated in this disclosure.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A system for securely storing data, comprising:
a non-transitory computer readable medium to store instructions of the system; and
a processor configured to execute the instructions, the processor being configured to:
use a master key to update a key;
use a first key to store a value;
use a second key for hiding the data; and
use a third key for securing the data.

2. The system of claim 1, wherein the master key updates at least one of a second master key, the first key, the second key, and the third key.

3. The system of claim 1 or 2, wherein the processor is further configured to overwrite the second key after the second master key is installed, and/or the processor is further configured to remove the ability to decode the second master key material.

4. The system of one of claims 1-3, wherein the first key is a fixed key, and/or wherein the value is an odometer (ODO) value stored in an update counter.

5. The system of one of claims 1-4, wherein the processor is further configured to update the first key, and wherein a backend identifies the first key, and/or the processor is further configured to use the second key for transport encryption of key material between a backend and the processor.

6. The system of one of claims 1-5, wherein at least one of the master key, the first key, the second key, and the third key is write protected.

7. A system for updating an odometer (ODO) value in a vehicle, comprising:
a microprocessor, the microprocessor being configured to execute instructions stored on a non-transitory computer readable medium;
a sensor coupled to the microprocessor and configured to receive information of distance the vehicle has traveled; and
a dedicated flash coupled to the microprocessor;
wherein the microprocessor is further configured to:
store an ODO value as a counter;
transmit a new ODO value;
accept the new ODO value if the new ODO value is higher in value than the ODO value;
store the new ODO value; and
use the new ODO value to update the counter.

8. The system of claim 7, wherein the ODO value is a monotonic value.

9. The system of claim 7 or 8, wherein the microprocessor is further configured to update the counter incrementally, and/or the microprocessor is further configured to encode the ODO value in the 24 most significant bits (MSB) of the counter and leave four least significant bits (LSB) unused.

10. The system of one of claims 7-9, wherein the microprocessor is further configured to use the MSB to perform the update through a tester to verify an actual ODO value is an expected ODO value, and/or the microprocessor is further configured to provide an error message if the actual ODO value is not the expected ODO value.

11. A method for returning an odometer (ODO) value through a key update procedure, wherein verification of the ODO value is performed by a backend, accessing the ODO value in a vehicle having a control unit, wherein the ODO value data is stored in a storage means, the method comprising:
installing a first new master key over an original master key;
using the first new master key to install a second new master key having key update material;
using the first master key to install a first new key containing an update counter with the ODO value concatenated by one; and
using the original master key to install a second new key.

12. The method of claim 11, further comprising:
using the first master key to decode the key update material of the second new master.

13. The method of claim 11 or 12, further comprising:
using the second master key to change a first value of the second new key to a second value.

14. The method of one of claims 11-13, wherein authenticating the ODO value by installing the first new key using the first master key.

15. The method of one of claims 11-14, further comprising:
verifying that the update counter is encrypted with a master key;
tracking a number of master key and the second new key updates;
determining a correct update counter; and
releasing the key update material.
